(19) **Europäisches Patentamt / European Patent Office / Office européen des brevets**

(11) **EP 4 539 568 A1**

(12) **EUROPEAN PATENT APPLICATION**
published in accordance with Art. 153(4) EPC

(43) Date of publication:
**16.04.2025 Bulletin 2025/16**

(21) Application number: **22945168.7**

(22) Date of filing: **06.06.2022**

(51) International Patent Classification (IPC):
**H04W 68/00** (2009.01)

(52) Cooperative Patent Classification (CPC):
Y02D 30/70

(86) International application number:
**PCT/CN2022/097224**

(87) International publication number:
**WO 2023/236018 (14.12.2023 Gazette 2023/50)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventor: **LI, Yanhua**
**Beijing 100085 (CN)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(54) **MONITORING METHOD AND APPARATUS, COMMUNICATION DEVICE AND STORAGE MEDIUM**

(57) Provided in the embodiments of the present invention are a monitoring method and apparatus, a communication device and a storage medium. The monitoring method is executed by a UE and comprises: in response to a UE being in an inactive state, determining a paging subgroup ID corresponding to a paging subgrouping manner, wherein the paging subgroup ID is used by the UE in the inactive state to monitor a wake-up signal and/or a paging message.

```
┌──────────┐                              ┌────────────────┐
│    UE    │                              │ network device │
└────┬─────┘                              └───────┬────────┘
     │◄────────── radio communication ──────────►│
     │                                            │
┌────┴─────────────────────────────────────┐     │
│ S21: determining a paging subgroup ID in  │     │
│ a paging subgrouping mode in response to  │     │
│ the UE being in an inactive state, where  │     │
│ the paging subgroup ID is used for the UE │     │
│ in the inactive state to monitor a wake-up│     │
│ signal and/or a paging message            │     │
└────┬─────────────────────────────────────┘     │
     │                                            │
```

FIG. 2

EP 4 539 568 A1

**Description**

**FIELD**

The present invention relates to, but is not limited to, the technical field of communication technologies, and more particularly to a monitoring method and apparatus, a communication device, and a storage medium.

**BACKGROUND**

In the related technology, if paging is performed without paging subgrouping, all user equipment (UE) devices are woken up in for example one paging occasion (PO). Within the paging occasion, paging probabilities of the UEs are different, UE with a relatively low paging probability will also be woken up by mistake, which will cause unnecessary power consumption. Therefore, it is considered that the UEs should be grouped for paging. No matter which subgrouping method is used, the UE and the network device (such as a base station and a core network device) need to have an agreement on the paging subgroup in which the UE is located. In this way, a paging message can be sent to the UE normally.

When the UE is in a radio resource control (RRC) inactive state, the UE needs to monitor core network (CN) paging and radio access network (RAN) paging at the same time. At this time, there is a risk that the state of the UE considered by the network device is inconsistent with the actual state of the UE. In this case, if the UE performs the paging according to an original subgrouping, the paging message will be lost.

**SUMMARY**

Embodiments of the present invention provide a monitoring method and apparatus, a communication device, and a storage medium.

According to a first aspect of the present invention, a monitoring method, performed by a UE, is provided. The method includes: determining a paging subgroup identifier (ID) in a paging subgrouping mode in response to the UE being in an inactive state, where the paging subgroup ID is used for the UE in the inactive state to monitor a wake-up signal and/or a paging message.

In some embodiments, the paging subgrouping mode includes: a paging subgrouping mode based on an ID of the UE (UE-ID).

In some embodiments, determining the paging subgroup ID in the paging subgrouping mode in response to the UE being in the inactive state includes: determining the paging subgroup ID of the UE in the inactive state according to a paging subgroup ID determination mode of the UE in an idle state in response to the UE being in the inactive state.

In some embodiments, determining the paging subgroup ID of the UE in the inactive state according to the paging subgroup ID determination mode of the UE in the idle state includes one of: determining the paging subgroup ID of the UE in the inactive state as a paging subgroup ID used by the UE in the idle state; or determining the paging subgroup ID of the UE in the inactive state according to a paging cycle of the UE in the idle state.

In some embodiments, determining the paging subgroup ID of the UE in the inactive state according to the paging subgroup ID determination mode of the UE in the idle state includes at least one of: determining the paging subgroup ID of the UE in the inactive state according to the paging subgroup ID determination mode of the UE in the idle state in response to the UE supporting an ability of monitoring the wake-up signal; determining the paging subgroup ID of the UE in the inactive state according to the paging subgroup ID determination mode of the UE in the idle state in response to the UE supporting an ability of the paging subgrouping mode based on the UE-ID; or determining the paging subgroup ID of the UE in the inactive state according to the paging subgroup ID determination mode of the UE in the idle state in response to the UE supporting an ability of monitoring the wake-up signal and supporting an ability of the paging subgrouping mode based on the UE-ID.

In some embodiments, determining the paging subgroup ID of the UE in the inactive state according to the paging subgroup ID determination mode of the UE in the idle state includes: determining the paging subgroup ID of the UE in the inactive state according to the paging subgroup ID determination mode of the UE in the idle state in response to both the UE and a network device supporting a predetermined ability; or determining the paging subgroup ID of the UE in the inactive state according to the paging subgroup ID determination mode of the UE in the idle state in response to the UE and/or a network device supporting a predetermined ability.

In some embodiments, the paging subgroup ID of the UE in the inactive state is determined according to one of ability information of the UE or ability information of a network device in response to at least one of the UE or the network device not supporting a predetermined ability.

In some embodiments, the predetermined ability includes at least one of: a first ability used to indicate an ability of determining an inactive state paging occasion according to an idle state paging occasion; a second ability used to indicate an ability of determining an inactive state paging subgroup according to an idle state subgroup; a third ability used to indicate an ability based on an access network of determining a paging occasion of radio access network (RAN) paging in the inactive state according to an idle state paging occasion; or a fourth ability used to indicate an ability based on an access network of determining a paging subgroup for sending the wake-up signal under RAN paging in the inactive state according to an idle state paging subgroup.

In some embodiments, the method includes: receiving paging configuration information, where the paging configuration information is used to indicate at least one of: first ability information of the first ability of the UE; second ability information of the second ability of the UE; third ability information of the third ability of the network device; or fourth ability information of the fourth ability of the network device.

According to a second aspect of the present invention, a monitoring method, performed by a network device, is provided. The method includes: sending paging configuration information, where the paging configuration information is used to instruct a UE in an inactive state to determine a paging subgroup ID in a paging subgrouping mode, and the paging subgroup ID is used for the UE in the inactive state to monitor a wake-up signal and/or a paging message.

In some embodiments, the paging subgrouping mode includes: a paging subgrouping mode based on UE-ID.

In some embodiments, the paging configuration information is further used to indicate at least one of: first ability information of the UE, where the first ability information is used to indicate an ability of determining an inactive state paging occasion according to an idle state paging occasion; second ability information of the UE, where the second ability information is used to indicate an ability of determining an inactive state paging subgroup according to an idle state subgroup; third ability information of the network device, where the third ability information is used to indicate an ability of determining a paging occasion of radio access network (RAN) paging in the inactive state according to an idle state paging occasion; or fourth ability information of the network device, where the fourth ability information is used to indicate an ability of determining a paging subgroup for sending the wake-up signal under RAN paging in the inactive state according to an idle state paging subgroup.

According to a third aspect of the present invention, a monitoring apparatus is provided. The apparatus includes: a processing module configured to determine a paging subgroup ID in a paging subgrouping mode in response to a UE being in an inactive state. The paging subgroup ID is used for the UE in the inactive state to monitor a wake-up signal and/or a paging message.

In some embodiments, the paging subgrouping mode includes: a paging subgrouping mode based on UE-ID.

In some embodiments, the processing module is configured to determine the paging subgroup ID of the UE in the inactive state according to a paging subgroup ID determination mode of the UE in an idle state in response to the UE being in the inactive state.

In some embodiments, the processing module is configured to determine the paging subgroup ID of the UE in the inactive state as a paging subgroup ID used by the UE in the idle state; or the processing module is configured to determine the paging subgroup ID of the UE in the inactive state according to a paging cycle of the UE in the idle state.

In some embodiments, the processing module is configured to perform at least one of: determining the paging subgroup ID of the UE in the inactive state according to the paging subgroup ID determination mode of the UE in the idle state in response to the UE supporting an ability of monitoring the wake-up signal; determining the paging subgroup ID of the UE in the inactive state according to the paging subgroup ID determination mode of the UE in the idle state in response to the UE supporting an ability of the paging subgrouping mode based on the UE-ID; or determining the paging subgroup ID of the UE in the inactive state according to the paging subgroup ID determination mode of the UE in the idle state in response to the UE supporting an ability of monitoring the wake-up signal and supporting an ability of the paging subgrouping mode based on the UE-ID.

In some embodiments, the processing module is configured to determine the paging subgroup ID of the UE in the inactive state according to the paging subgroup ID determination mode of the UE in the idle state in response to both the UE and a network device supporting a predetermined ability; or the processing module is configured to determine the paging subgroup ID of the UE in the inactive state according to the paging subgroup ID determination mode of the UE in the idle state in response to the UE and/or a network device supporting a predetermined ability.

In some embodiments, the processing module is configured to determine the paging subgroup ID of the UE in the inactive state according to one of ability information of the UE or ability information of a network device in response to at least one of the UE or the network device not supporting a predetermined ability.

In some embodiments, the predetermined ability includes at least one of: a first ability used to indicate an ability of determining an inactive state paging occasion according to an idle state paging occasion; a second ability used to indicate an ability of determining an inactive state paging subgroup according to an idle state subgroup; a third ability used to indicate an ability based on an access network of determining a paging occasion of radio access network (RAN) paging in the inactive state according to an idle state paging occasion; or a fourth ability used to indicate an ability based on an access network of determining a paging subgroup for sending the wake-up signal under RAN paging in the inactive state according to an idle state paging subgroup.

In some embodiments, the method includes: a receiving module configured to receive paging configuration information, where the paging configuration information is used to indicate at least one of: first ability information of the first ability of the UE; second ability information of the second ability of the UE; third ability information of the third ability of the network device; or fourth ability information of the fourth ability of the network device.

According to a fourth aspect of the present invention, a monitoring apparatus is provided. The apparatus includes: a sending module configured to send paging configuration information. The paging configuration information is used to instruct a UE in an inactive state to determine a paging subgroup ID in a paging subgrouping mode, and the paging subgroup ID is used for the UE in the inactive state to monitor a wake-up signal and/or a paging message.

In some embodiments, the paging subgrouping mode includes: a paging subgrouping mode based on UE-ID.

In some embodiments, the paging configuration information is further used to indicate at least one of: first ability information of the UE, where the first ability information is used to indicate an ability of determining an inactive state paging occasion according to an idle state paging occasion; second ability information of the UE, where the second ability information is used to indicate an ability of determining an inactive state paging subgroup according to an idle state subgroup; third ability information of the network device, where the third ability information is used to indicate an ability of determining a paging occasion of radio access network (RAN) paging in the inactive state according to an idle state paging occasion; or fourth ability information of the network device, where the fourth ability information is used to indicate an ability of determining a paging subgroup for sending the wake-up signal under RAN paging in the inactive state according to an idle state paging subgroup.

According to a fifth aspect of the present invention, a communication device is provided, including: a processor; and a memory for storing instructions executable by the processor. The processor is configured to execute the instructions to cause the monitoring method according to any embodiment of the present invention to be implemented.

According to a sixth aspect of embodiments of the present invention, there is provided a computer storage medium having stored therein an executable program that, when executed by a processor, causes the monitoring method of any embodiment of the present invention to be implemented.

The technical solutions provided by the embodiments of the present invention may include the following beneficial effects.

In the embodiments of the present invention, when the UE is in the inactive state, the paging subgroup ID in the paging subgroup mode can be re-determined, so that the UE in the inactive state can monitor the PEI and/or the paging message. In this way, compared to the situation that the UE in the inactive state monitors the paging with the paging subgroup for the inactive state, and the network device performs the paging according to the paging subgroup in the idle state, the present method can reduce the loss of the paging message and improve the success rate of the paging.

It is to be understood that both the foregoing general description and the following detailed description are illustrative and explanatory only and are not intended to limit the embodiments of the present invention.

BRIEF DESCRIPTION OF THE DRAWINGS

FIG. 1 is a schematic diagram of a wireless communication system according to an illustrative embodiment.
FIG. 2 is a flowchart of a monitoring method according to an illustrative embodiment.
FIG. 3 is a flowchart of a monitoring method according to an illustrative embodiment.
FIG. 4 is a flowchart of a monitoring method according to an illustrative embodiment.
FIG. 5 is a flowchart of a monitoring method according to an illustrative embodiment.
FIG. 6 is a flowchart of a monitoring method according to an illustrative embodiment.
FIG. 7 is a flowchart of a monitoring method according to an illustrative embodiment.
FIG. 8 is a block diagram of a monitoring apparatus according to an illustrative embodiment.
FIG. 9 is a block diagram of a monitoring apparatus according to an illustrative embodiment.
FIG. 10 is a block diagram of a UE according to an illustrative embodiment.
FIG. 11 is a block diagram of a base station according to an illustrative embodiment.

DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. They are merely examples of apparatuses and methods consistent with some aspects of the present invention as recited in the appended claims.

Terms used in the embodiments of the present invention are only for the purpose of describing specific embodiments, and shall not be construed to limit the present invention. As used in the embodiments of the present invention and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present invention for describing various information, these information should not be limited by these terms. These terms are only used for distinguishing information of the same type from others. For example, first information may also be referred to as second information, and similarly, the second information may also be referred to as the first information, without departing from the scope of the embodiments of the present invention. As used herein, the term "if" may be construed to mean "when" or "upon" or "in response to determining" depending on the context.

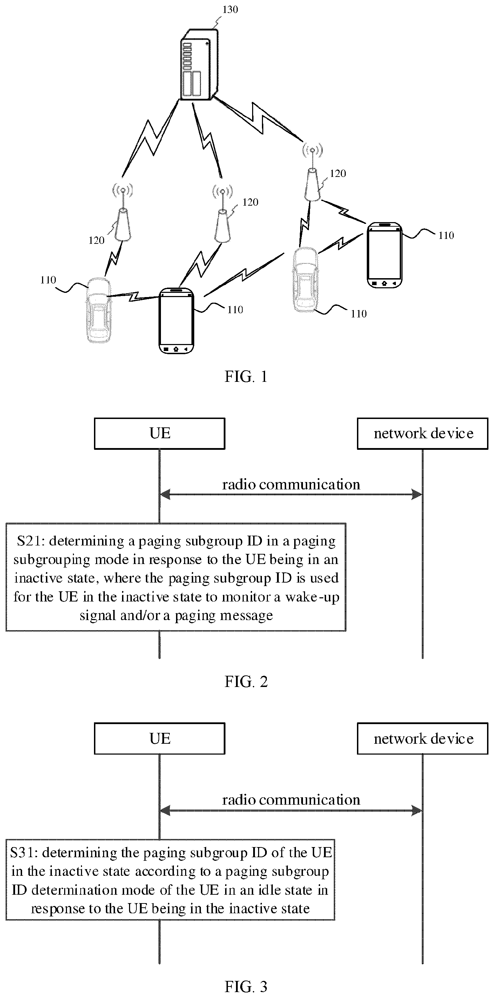

Referring to FIG. 1, a schematic diagram of a wireless communication system according to an illustrative embodiment, as shown in FIG. 1, the wireless communication system is a communication system based on cellular mobile communication technology, and the wireless communication system may include several UEs 110 and several base stations 120.

A UE 110 may be a device that provides voice and/or data connectivity to a user. The UE 110 can communicate with one or more core networks via a radio access network (RAN), and the UE 110 may be an Internet of Things (IoT) UE, such as a sensor device, a mobile phone (or called a "cellular" phone) and a computer including an IoT UE. For example, the UE 110 may be a fixed device, a portable device, a pocket device, a hand-held device, a computer built-in device or a vehicle-mounted device. For example, the UE 110 may be a station (STA), a subscriber unit, a subscriber station, a mobile station, a mobile, a remote station, an access point, a remote terminal, an access terminal, a user terminal, a user agent, a user device, or a user equipment. Alternatively, the UE 110 may also be a device of an unmanned aerial vehicle. Alternatively, the UE 110 may also be a vehicle-mounted device, for example, it may be a trip computer with a wireless communication function, or a wireless communication device connected externally to the trip computer. Alternatively, the UE 110 may also be a roadside device, for example, it may be a street lamp, a signal lamp, or other roadside devices with a wireless communication function.

The base station 120 may be a network device in the wireless communication system. The wireless communication system may be the 4th generation (4G) mobile communication system, also known as a long term evolution (LTE) system, or the wireless communication system may be a 5G system, also called a new radio (NR) system or 5G NR system. Alternatively, the wireless communication system may be a next-generation system of the 5G system. An access network in the 5G system is called new generation-radio access network (NG-RAN).

The base station 120 may be an evolved node B (eNB) in a 4G system. Alternatively, the base station 120 may be a next-generation node B (gNB) adopting a centralized and distributed architecture in the 5G system. When the base station 120 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the base station 120 is not limited in the embodiments of the present invention.

A wireless connection can be established between the base station 120 and the UE 110 through a wireless radio interface. In different embodiments, the wireless radio interface is a wireless radio interface based on the fourth generation (4G) mobile communication network technology standard; or the wireless radio interface is a wireless radio interface based on the fifth generation (5G) mobile communication network technology standard, such as a new radio interface; or the wireless radio interface is a wireless radio interface based on a next-generation (from 5G) mobile communication network technology standard.

In some embodiments, an end-to-end (E2E) connection is established between the UEs 110, for example, vehicle to everything (V2X) communication, such as vehicle to vehicle (V2V) communication, vehicle to infrastructure (V2I) communication and vehicle to pedestrian (V2P) communication.

Here, the UE described above may be a terminal device in the embodiments described below.

In some embodiments, the above wireless communication system may further include a network management device 130.

Several base stations 120 are respectively connected to the network management device 130. The network management device 130 may be a core network device in the wireless communication system, for example, the network management device 130 may be a mobility management entity (MME) in an evolved packet core (EPC) network. Alternatively, the network management device may be other core network devices, such as a serving gateway (SGW), a public data network gateway (PGW), a policy and charging rule function (PCRF) unit or a home subscriber server (HSS), etc. The implementation form of the network management device 130 is not limited in the embodiments of the present invention.

In order to facilitate understanding for those skilled in the art, multiple implementations are provided to clearly describe the technical solution of the embodiments of the present invention. Those skilled in the art can understand that the multiple implementations provided for the embodiments of the present invention may be executed alone or in combination with the methods of other embodiments of the present invention. The embodiments executed alone or in combination may further be executed together with some methods of other related technologies, which are not limited in the embodiments of the present invention.

In order to better understand the technical solution described in any embodiment of the present invention, a partial description of the related technology is provided.

In an embodiment, if the paging subgrouping is not performed, UEs are woken up in a paging occasion. In this case, UE with a relatively low paging probability will be woken up improperly, resulting in unnecessary power consumption. Therefore, the UEs need to be grouped for paging, and the UEs are paged in a paging subgrouping mode. In an embodiment, paging subgrouping information may be carried in paging downlink control information (DCI) or in paging early indication (PEI). No matter which paging subgrouping mode is used, the UE and the network device (including a base station and a core network) need to agree on the subgroup where the UE is located before the paging message can be sent to the UE normally.

In an embodiment, two paging subgrouping modes are provided. One is a paging subgrouping mode based on network allocation (CN-assigned subgrouping), and the other is a random subgrouping mode based on the UE identifier (UE_ID based subgrouping), or a paging subgrouping mode based on UE-ID.

In an embodiment, a process of determining a paging subgroup ID (SubgroupID) according to a UE-ID paging subgrouping mode is provided. The paging subgroup ID (SubgroupID) is determined according to the following formula:

$$\text{SubgroupID} = (\text{floor}(UE\_ID/(N \times Ns)) \bmod \text{subgroupsNumForUEID}) + (\text{subgroupsNumPerPO} - \text{subgroupsNumForUEID});$$

where N represents a paging frame density in a time domain, that is, the number of total paging frames in a paging period (T); Ns represents a paging density in a paging frame (PF) in the time domain, that is, the number of paging times or paging occasions in a paging frame, which may be 1, 2 or 4; UE_ID represents a identifier of a paging subgroup where a UE is located, in an embodiment, UE_ID is 5G-S-TMSI mod X, and X is 32768 if extended discontinuous reception (eDRX) is applied, otherwise, X is 8192; subgroupsnumforUEID represents the number of total paging subgroup resources used for UE_ID, for example, it indicates the number of subgroups from UE_ID based subgrouping in a PO in system information broadcast; subgroupsNumPerPO indicates the number of total subgroups that can be supported by the PO in the system information broadcast; "mod" represent a remainder function, which obtains a remainder after two numerical expressions are subjected to a division operation; "floor" represents a round down function, that is, it takes an integer no larger than a numeric expression, for example floor (3.7) = 3.

In an embodiment, a paging subgrouping mode based on network allocation is provided. The paging subgrouping mode based on the network allocation can be performed by the core network device as a unified node. Here, when the network allocates paging subgroup identifiers, determination is made according to attributes or statistical paging probabilities of UEs.

For example, RAN2#114 Agreements[2]: CN is responsible for allocating UEs to UE paging subgroups based on UE characteristics; Use same UE subgroups when in RRC_IDLE and RRC _INACTIVE.

Here, if the core network device does not provide the paging subgroup ID to the UE or the UE does not support the paging subgrouping mode of the network device, the UE will fall back to the paging subgrouping mode of the UE-ID to select paging subgroup resources.

In some application scenarios, when the UE is in an inactive state, there will be inconsistencies between UE's states maintained by the base station and the core network device. For the paging subgrouping mode based on the network allocation, the UE utilizes the subgroup determined by the paging subgrouping based on the network allocation in both the idle state and the inactive state. When the UE transitions from the idle state to the inactive state, the core network device will not assign/allocate a new subgroup. Therefore, there is no miss match problem when the UE is in the idle state and inactive state. When the UE-ID based paging subgrouping mode is used, due to different paging cycles in the inactive state and the idle state, the subgroups in the two states are different, thus causing the miss match problem.

The following provides a calculation example. Common assumption: RAN paging cycle=rf32; UE specific DRX value=rf64; default paging cycle=rf128; N=T; Ns=4; UE_ID=1234; N: number of total paging frames in T; Ns: number of paging occasions for a PF; UE_ID: 5G-S-TMSI mod X, where X is 32768 if eDRX is applied; otherwise, X is 8192; subgroupsNumForUEID:8. In this case, SFN for the PF is determined by: $(SFN+PF\_offset) \bmod T = (T \operatorname{div} N) \times (UE\_ID \bmod N)$; Index(i_s), indicating an index of the PO, is determined by: $i\_s = \text{floor}(UE\_ID/N) \bmod Ns$; $\text{SubgroupID} = (\text{floor}(UE\_ID/(N \times Ns)) \bmod \text{subgroupsNumForUEID}) + (\text{subgroupsNumPerPO} - \text{subgroupsNumForUEID})$.

That is, it is assumed that a value of the RAN paging cycle is 32; a value of the UE-specific DRX cycle is 64; a value of the default paging cycle is 128; N is the number of all paging frames in one paging cycle (T); Ns is the number of paging times within the frame (PF) and is 4; a value of the UE_ID is 1234; and a value of subgroupsNumForUEID is 8.

SFN is determined by PF: $(SFN+PF\_offset) \bmod T = (T \operatorname{div} N) \times (UE\_ID \bmod N)$; a paging occasion sequence number (Index(i_s)) indicates a sequence number of a paging occasion (PO), which is determined by the followings:

$$i\_s = floor(UE\_ID/N) \bmod Ns;$$

SubgroupID = (floor(UE_ID/(N×Ns)) mod subgroupsNumForUEID) + (subgroupsNumPerPO - subgroupsNumFor-UEID).

In an embodiment, a calculation rule for paging subgroup ID is provided, as shown in Table 1 below.

Table 1

| RRC_IDLE calculation rule | Paging frame: 18, 82, 146, 210, 274, 338, 402, 466, 530, 594, 658, 722, 786, 850, 914, 978<br>SubgroupID = floor(UE_ID/(N × Ns)) mod subgroupsNumForUEID =floor(1234/(64*4)) mod 8=4 mod 8 =0 |
|---|---|
| RRC_INACTIVE calculation rule | Paging frame: 18, 50, 82, 114, 146, 178, 210, 242, 274, 306, 338, 370, 402, 434, 466, 498, 530, 562, 594, 626, 658, 690, 722, 754, 786, 818, 850, 882, 914, 946, 978, 1010<br><br>SubgroupID = floor(UE_ID/(N × Ns)) mod subgroupsNumForUEID = floor(1234/(32*4)) mod 8=9 mod 8 =1 |

The idle state in which the UE is located in the embodiments of the present invention refers to the RRC idle state; the inactive state in which the UE is located refers to the RRC inactive state.

In some embodiments, when the UE is in the inactive state, the UE needs to monitor CN paging and RAN paging. At this time, there may be a miss match between the network device and the UE. For example, the context of the UE is lost on the network side, and the network device thinks that the UE is in the RRC idle state, so it initiates the CN paging. At this time, the UE is still in the inactive state, and the network device considers the UE to be in the idle state.

As an example, an implementation of paging subgrouping is provided below. A paging subgroup may be a paging subgroup in paging DCI, or a paging subgroup using a wake-up signal. It is assumed that the UE in the idle state is assigned to subgroup 0 (that is, a paging subgroup ID is ID0), and the UE enters the inactive state or after calculation by the above formula, assuming that the RAN paging cycle is used, the UE will be assigned to subgroup 1 (that is, a paging subgroup ID is ID1). Under normal circumstances, if there is no miss match caused by the context loss on the network side, the base station sends the PEI to the UE according to subgroup ID1, and the UE monitors the PEI under subgroup ID1. However, once the context of the UE is lost on the network side (the subgroup ID1 maintained by the base station will also no longer exist), the network device thinks that the UE is in the idle state, and thus initiates CN paging. At this time, the base station determines the paging subgroup ID by using the paging cycle of the paging subgrouping mode configured by the network, that is, paging will be performed for subgroup ID0. However, the UE still uses subgroup ID1 to monitor paging, this will cause loss of the paging message or paging early indication.

Embodiments of the present invention provide a method for determining a paging subgroup ID to solve problems, during paging monitoring, caused by the state of the UE and the state that the network device thinks the UE is in being inconsistent.

As shown in FIG. 2, embodiments of the present invention provide a monitoring method, performed by the UE, including the following step.

In step S21, a paging subgroup ID in a paging subgrouping mode is determined in response to the UE being in an inactive state, where the paging subgroup ID is used for the UE in the inactive state to monitor a wake-up signal and/or a paging message.

Here, the UE may be various mobile terminals or fixed terminals. For example, the UE may be, but is not limited to, a mobile phone, a computer, a server, a wearable device, a game control platform or a multimedia device.

In the embodiments of the present invention, the inactive state involved may be the RRC inactive state, and the idle state involved may be the RRC idle state.

In an embodiment, the paging subgrouping mode may be, but is not limited to: a paging subgrouping mode based on an ID of the UE (UE-ID).

In an embodiment, the wake-up signal may be, but is not limited to, PEI.

In an embodiment, the paging message may be any kind of paging message. For example, the paging message may be DCI.

Here, the paging subgroup ID is used to monitor the PEI when the paging subgroup ID of the UE in the inactive state is different from the paging subgroup ID of the UE determined by the network device.

Here, the paging subgroup ID is used to monitor the PEI when the state of the UE is inconsistent with the state of the UE determined by the network device. Here, the state of the UE is the RRC inactive state, and the network device determines that the state of the UE is the RRC idle state.

Here, the network device includes an access network device and/or a core network device. Here, the access network device may be, but is not limited to, a base station. The core network device may be, but is not limited to, various network functions or entities that implement network functions. Here, the base station may be, but is not limited to, at least one of: a 3G base station, a 4G base station, a 5G base station or other evolved base stations.

In an embodiment, the wake-up signal may be sent by the access network device or the core network device. If the wake-up signal is sent by the core network device, the core network device sends the wake-up signal to the base station, and the base station forwards the wake-up signal to the UE.

In the embodiments of the present invention, when the UE is in the inactive state, the paging subgroup ID in the paging subgrouping mode can be re-determined, so that the UE in the inactive state can monitor the PEI and/or the paging message. In this way, compared to the situation that the UE in the inactive state monitors the paging with the paging subgroup for the inactive state, and the network device performs the paging according to the paging subgroup in the idle state, the present method can reduce the loss of the paging message and improve the success rate of the paging.

In some embodiments, the method includes: receiving paging configuration information sent by the network device.

Step S21 includes: determining the paging subgroup ID in the paging subgrouping mode according to the paging confirmation information in response to the UE being in the inactive state. The paging subgroup ID is used for the UE in the inactive state to monitor the wake-up signal.

Embodiments of the present invention provide a monitoring method, performed by the UE, including: receiving paging configuration information sent by the network device; and determining the paging subgroup ID in the paging subgrouping mode according to the paging confirmation information in response to the UE being in the inactive state. The paging subgroup ID is used for the UE in the inactive state to monitor the wake-up signal.

In this way, in the embodiments of the present invention, the paging subgroup ID can be re-determined based on the paging configuration information of the network device when the UE is in the inactive state.

It should be noted that those skilled in the art can understand that the method provided in the embodiments of the present invention can be executed alone or together with some methods in the embodiments of the present invention or some methods in related technologies.

In some embodiments, step S21 includes: in response to the UE being in the inactive state, determining the paging subgroup ID of the UE in the inactive state according to a paging subgroup ID determination mode of the UE in an idle state.

As shown in FIG. 3, embodiments of the present invention provide a monitoring method, performed by the UE, including the following step.

In step S31, the paging subgroup ID of the UE in the inactive state is determined according to a paging subgroup ID determination mode of the UE in an idle state in response to the UE being in the inactive state.

In some embodiments, step S31 includes one of: determining the paging subgroup ID of the UE in the inactive state as a paging subgroup ID used by the UE in the idle state; or determining the paging subgroup ID of the UE in the inactive state according to a paging cycle of the UE in the idle state.

Embodiments of the present invention provide a monitoring method, performed by the UE, including: determining the paging subgroup ID of the UE in the inactive state as a paging subgroup ID used by the UE in the idle state; or determining the paging subgroup ID of the UE in the inactive state according to a paging cycle of the UE in the idle state.

For example, when the UE is in the idle state, the paging subgroup ID determined according to the UE-ID based paging subgrouping mode is ID0. The UE determines that the paging subgroup ID in the inactive state is the paging subgroup ID used by the UE in the idle state. That is, it is determined that the paging subgroup ID in the inactive state is ID0. If the context of the UE is lost on the network side and the network device thinks that the UE is in the idle state, the determined paging subgroup ID of the UE is ID0. In this way, when the UE is in the inactive state, it can monitor the PEI in paging subgroup resource(s) configured for the paging subgroup ID being ID0, and the network device can initiate the paging such as the PEI in the paging subgroup resource(s) for the paging subgroup ID being ID0. In this way, the loss of the paging message is avoided and the paging success rate is improved.

For example, when the UE is in the idle state, the paging subgroup determined according to the paging cycle of the UE in the idle state is ID0. The UE determines the paging subgroup ID in the inactive state according to the paging cycle in the idle state, that is, it determines the paging subgroup ID in the inactive state is ID0. If the context of the UE is lost on the network side and the network device thinks that the UE is in the idle state, the determined paging subgroup ID of the UE is ID0. In this way, when the UE is in the inactive state, it can monitor the PEI in the paging subgroup resource(s) configured for the paging subgroup ID being ID0, and the network device can initiate the paging such as the PEI in the paging subgroup resource(s) for the paging subgroup ID being ID0. In this way, the loss of the paging message is avoided and the paging success rate is improved.

In this way, in embodiments of the present invention, the paging subgroup ID of the UE in the inactive state can be determined as the paging subgroup ID of the UE in the idle state, or the paging subgroup ID can be determined according to the paging cycle in the idle state. In this way, the paging subgroup ID of the UE in the inactive state for the paging can be consistent with the paging subgroup ID sent by the network device, thus reducing the paging message loss and improving the paging success rate.

In the embodiments of the present invention, it can not only solve the problem of the paging message loss caused by the inconsistency (due to the loss of the UE's context on the network side) between the inactive state where the UE is located and the idle state where the network device thinks that the UE is located, but also solve the problem of the paging message loss caused by the inconsistency between any state of the UE and the state of the UE considered by the network device.

It should be noted that those skilled in the art can understand that the method provided in the embodiments of the present invention can be executed alone or together with some methods in the embodiments of the present invention or some methods in related technologies.

In some embodiments, in step S31, determining the paging subgroup ID of the UE in the inactive state according to the paging subgroup ID determination mode of the UE in the idle state includes: based on a protocol agreement, determining the paging subgroup ID of the UE in the inactive state according to the paging subgroup ID determination mode of the UE in the idle state.

Embodiments of the present invention provide a monitoring method, performed by the UE, including: based on a protocol agreement, determining the paging subgroup ID of the UE in the inactive state according to the paging subgroup ID determination mode of the UE in the idle state.

Here, the protocol may be a wireless communication protocol, for example, it may be a 5G wireless communication protocol.

Here, the protocol may also be a protocol negotiated between the network device and the UE.

In some embodiments, the protocol stipulates at least one of: if the UE supports an ability of monitoring the wake-up signal, determining the paging subgroup ID of the UE in the inactive state according to the paging subgroup ID determination mode of the UE in the idle state; if the UE supports an ability of the paging subgrouping mode based on the UE-ID, determining the paging subgroup ID of the UE in the inactive state according to the paging subgroup ID determination mode of the UE in the idle state; if the UE supports an ability of monitoring the wake-up signal and supports the paging subgrouping mode based on the UE-ID, determining the paging subgroup ID of the UE in the inactive state according to the paging subgroup ID determination mode of the UE in the idle state; or if the UE currently uses the paging subgrouping mode based on the UE-ID, determining the paging subgroup ID of the UE in the inactive state according to the paging subgroup ID determination mode of the UE in the idle state.

Here, the UE currently uses the UE-ID-based paging subgrouping mode, which implicitly that the UE supports the ability of monitoring the wake-up signal and the UE-ID based paging subgrouping mode, and the network device also has the ability of supporting the UE-ID based paging subgrouping.

In some embodiments, determining the paging subgroup ID of the UE in the inactive state according to the paging subgroup ID determination mode of the UE in the idle state in step S31 includes at least one of: determining the paging subgroup ID of the UE in the inactive state according to the paging subgroup ID determination mode of the UE in the idle state in response to the UE supporting an ability of monitoring the wake-up signal; determining the paging subgroup ID of the UE in the inactive state according to the paging subgroup ID determination mode of the UE in the idle state in response to the UE supporting an ability of the paging subgrouping mode based on the UE-ID; or determining the paging subgroup ID of the UE in the inactive state according to the paging subgroup ID determination mode of the UE in the idle state in response to the UE supporting an ability of monitoring the wake-up signal and supporting an ability of the paging subgrouping mode based on the UE-ID.

If the UE is currently using the UE-ID based subgrouping mode (implying that the UE supports monitoring the wake-up signal and supports the UE-ID based paging subgrouping mode, and the network also has a subgrouping ability of supporting the UE-ID based paging subgrouping mode), the paging subgroup ID of the UE in the inactive state is determined according to the paging subgroup ID determination mode of the UE in the idle state.

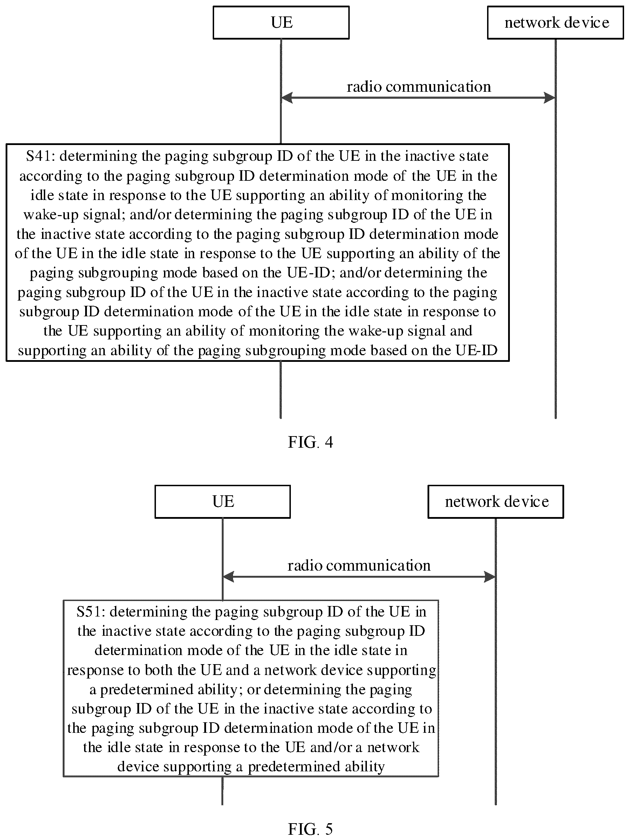

As shown in FIG. 4, embodiments of the present invention provide a monitoring method, performed by the UE, including the following step.

In step S41, the paging subgroup ID of the UE in the inactive state is determined according to the paging subgroup ID determination mode of the UE in the idle state in response to the UE supporting an ability of monitoring the wake-up signal; and/or the paging subgroup ID of the UE in the inactive state is determined according to the paging subgroup ID determination mode of the UE in the idle state in response to the UE supporting an ability of the paging subgrouping mode based on the UE-ID; and/or the paging subgroup ID of the UE in the inactive state is determined according to the paging subgroup ID determination mode of the UE in the idle state in response to the UE supporting an ability of monitoring the wake-up signal and supporting an ability of the paging subgrouping mode based on the UE-ID.

In some embodiments of the present invention, the wake-up signal is the wake-up signal in the above-mentioned embodiments. For example, the wake-up signal includes the PEI.

For example, if the UE is in the inactive state, and the UE supports the ability of monitoring the wake-up signal and/or supports the UE-ID based paging subgrouping mode according to the protocol, the UE may determine that the paging subgroup ID is the paging subgroup ID in the idle state.

In embodiments of the present invention, the UE can directly determine the paging subgroup in the inactive state according to the paging subgroup ID of the UE in the idle state when the UE supports the ability of monitoring the wake-up signal and the paging subgrouping mode based on the UE-ID. In this way, there is no need for the network device to send instructions such as network signaling, interaction of network signaling can be reduced and the power consumption of the network device and the UE can be reduced.

It should be noted that those skilled in the art can understand that the method provided in the embodiments of the present invention can be executed alone or together with some methods in the embodiments of the present invention or some methods in related technologies.

In some embodiments, determining the paging subgroup ID of the UE in the inactive state according to the paging subgroup ID determination mode of the UE in the idle state in step S41 includes: determining the paging subgroup ID of the UE in the inactive state according to the paging subgroup ID determination mode of the UE in the idle state in response to both the UE and the network device supporting a predetermined ability; determining the paging subgroup ID of the UE in the inactive state according to the paging subgroup ID determination mode of the UE in the idle state in response to the UE and/or the network device supporting a predetermined ability.

As shown in FIG. 5, embodiments of the present invention provide a monitoring method, performed by the UE, including the following step.

In step S51, the paging subgroup ID of the UE in the inactive state is determined according to the paging subgroup ID determination mode of the UE in the idle state in response to both the UE and a network device supporting a predetermined ability; or the paging subgroup ID of the UE in the inactive state is determined according to the paging subgroup ID determination mode of the UE in the idle state in response to the UE and/or the network device supporting a predetermined ability.

In some embodiments, the predetermined ability is used to indicate an ability of determining a PO in the inactive state according to a PO in the idle state.

In an embodiment, the UE supports the predetermined ability, which may indicate that the UE supports an ability of using the PO in the idle state when the UE is in the inactive state; and/or the network device supports the predetermined ability, which may indicate that the network device supports an ability of determining a PO of RAN paging in the inactive state according to an idle state PO.

In an embodiment, step S51 may be determining the paging subgroup ID of the UE in the inactive state according to the paging subgroup ID determination mode of the UE in the idle state in response to the predetermined ability supported by the UE and the predetermined ability supported by the network device being consistent.

Here, if the UE supports the ability of using the PO in the idle state when the UE is in the inactive state, and the network device supports the ability of determining the PO of the RAN paging in the inactive state according to the idle state PO, the predetermined ability supported by the UE is consistent with the predetermined ability supported by the network device.

In an embodiment, in step S51, determining the paging subgroup ID of the UE in the inactive state according to the paging subgroup ID determination mode of the UE in the idle state may indicates that determining the paging subgroup ID of the UE in the inactive state according to one of ability information of the UE or ability information of the network device.

In some embodiments, the predetermined ability includes at least one of: a first ability used to indicate an ability of determining an inactive state paging occasion according to an idle state paging occasion; a second ability used to indicate an ability of determining an inactive state paging subgroup according to an idle state subgroup; a third ability used to indicate an ability based on an access network of determining a paging occasion of radio access network (RAN) paging in the inactive state according to an idle state paging occasion; or a fourth ability used to indicate an ability based on an access network of determining a paging subgroup for sending the wake-up signal under RAN paging in the inactive state according to an idle state paging subgroup.

Here, the ability information of the predetermined ability includes, but is not limited to, one of: first ability information, second ability information, third ability information or fourth ability information. The first ability information is ability information indicating the first ability, and /or the second ability information is ability information indicating the second ability, and/or the third ability information is ability information indicating the third ability, and/or the fourth ability information is ability information indicating the fourth ability.

Here, the first ability information and/or the second ability information may be ability information of the UE. The third ability information and/or the fourth ability information may be ability information of the network device.

For example, the UE has an ability of supporting InactiveStatePO-Determination, which indicates whether the UE supports to use the same $i\_s$ to determine PO in RRC_INACTIVE state as in RRC_IDLE state. When UE supports PEI reception, it also indicates whether the UE supports to use the same UE-ID based subgroup in RRC_INACTIVE state as in RRC_IDLE state.

In embodiments of the present invention, if both the network device and the UE support the predetermined capability, that is, when they support the ability of determining the inactive PO according to the idle state PO, the paging subgroup ID of the UE in the inactive state may be determined according to the paging subgroup ID determination mode of the UE in the idle state. In this way, the paging message loss can be reduced and the paging success rate can be improved.

It should be noted that those skilled in the art can understand that the method provided in the embodiments of the present invention can be executed alone or together with some methods in the embodiments of the present invention or some methods in related technologies.

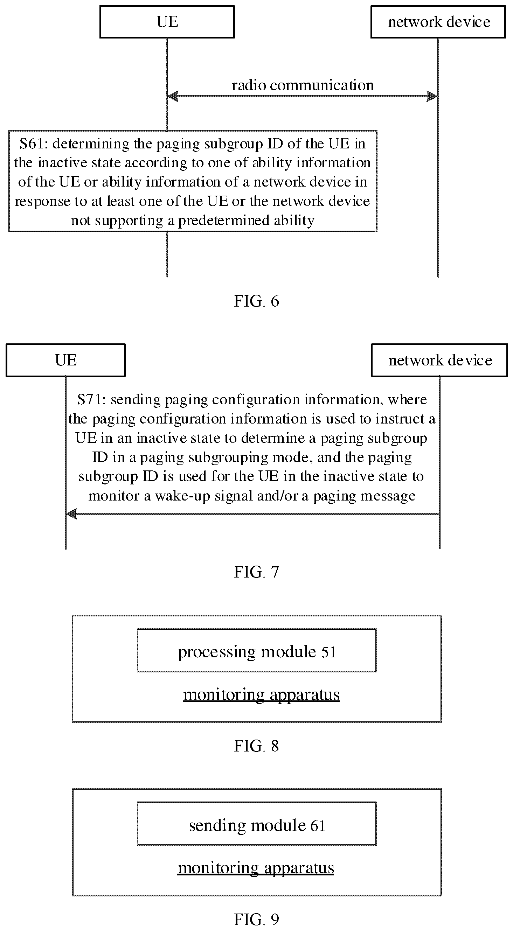

As shown in FIG. 6, embodiments of the present invention provide a monitoring method, performed by the UE, including the following step.

In step S61, the paging subgroup ID of the UE in the inactive state is determined according to one of ability information of the UE or ability information of the network device in response to at least one of the UE or the network device not supporting a predetermined ability.

In some embodiments of the present invention, the predetermined capability may be the predetermined capability in the above embodiments. For example, the predetermined ability information may be at least one of the first ability, the second ability, the third ability information, or the fourth ability.

In an embodiment, at least one of the UE or the network device does not support the predetermined ability, which may indicate that the predetermined ability supported by the UE is inconsistent with the predetermined ability supported by the network device. For example, the UE supports an ability of the inactive state PO and the network device supports the PO ability of determining a PO of RAN paging in the inactive state according to the idle state PO, this means that the predetermined capability supported by the UE is inconsistent with the predetermined capability supported by the network device.

In some embodiments, the ability information of the UE includes, but is not limited to, at least one of: first ability information used to indicate an ability of determining an inactive state paging occasion according to an idle state paging occasion; or second ability information used to indicate an ability of determining an inactive state paging subgroup according to an idle state subgroup.

In some embodiments, the ability information of the network device includes, but is not limited to, at least one of: third ability information used to indicate an ability based on an access network of determining a paging occasion of RAN paging in the inactive state according to an idle state paging occasion; or fourth ability information used to indicate an ability based on an access network of determining a paging subgroup for sending the wake-up signal under RAN paging in the inactive state according to an idle state paging subgroup.

In some embodiments, in step S61, determining the paging subgroup ID of the UE in the inactive state according to one of the ability information of the UE or the ability information of the network device includes at least one of: determining the paging subgroup ID of the UE in the inactive state according to the first ability information of the UE; determining the paging subgroup ID of the UE in the inactive state according to the second ability information of the UE; determining the paging subgroup ID of the UE in the inactive state according to the third ability information of the network device; or determining the paging subgroup ID of the UE in the inactive state according to the fourth ability information of the network device.

Embodiments of the present invention provide a monitoring method, performed by the UE, including at least one of: determining the paging subgroup ID of the UE in the inactive state according to the first ability information of the UE, where the first ability information is used to indicate an ability of determining an inactive state paging occasion according to an idle state paging occasion; determining the paging subgroup ID of the UE in the inactive state according to the second ability information of the UE, where the second ability information is used to indicate an ability of determining an inactive state paging subgroup according to an idle state subgroup; determining the paging subgroup ID of the UE in the inactive state according to the third ability information of the network device, where the third ability information is used to indicate an ability based on an access network of determining a paging occasion of RAN paging in the inactive state according to an idle state paging occasion; or determining the paging subgroup ID of the UE in the inactive state according to the fourth ability information of the network device, where the fourth ability information is used to indicate an ability based on an access network of determining a paging subgroup for sending the wake-up signal under RAN paging in the inactive state according to an idle state paging subgroup.

Here, the first ability may be inactiveStatePO-Determination; and/or the second ability may be inactiveState-Supgroup-Determination; and/or the third ability information may be ranPagingInIdlePO; and/or the fourth ability information may be ranPagingInIdleSubgroup.

As an embodiment, in response to both the UE and the network device supporting the predetermined ability, the paging subgroup ID of the UE in the inactive state is determined according to the paging subgroup ID determination mode of the UE in the idle state. The predetermined ability supported by the UE is the first ability. The predetermined ability supported by the network is the third ability. For example, the first ability may be inactiveStatePO-Determination, and the third ability may be ranPagingInIdlePO. For example, in RRC_INACTIVE state, if the UE supports inactiveStatePO-Determination and the network broadcasts ranPagingInIdlePO with value "true", the UE shall use the same subgrouping ID for UE-id UE_ID based subgrouping as for RRC_IDLE state. Otherwise, the UE determines the subgrouping based on the formula above.

For example, the second ability may be inactiveStateSupgroup-Determination. For example, in RRC_INACTIVE state, if the UE supports PEI, the UE shall use the same subgrouping ID for UE-id UE_ID based subgrouping as for RRC_IDLE state.

For example, the third ability may be ranPagingInIdlePO. For example, it indicates that the network supports to send RAN paging in PO that corresponds to the i_s as determined by UE in RRC_IDLE state, see TS38.304 [20]. If PEI-Config is present in SIB 1 and the UE supports inactiveStatePO-Determination, it also indicates that the network supports to send PEI for RAN paging in subgroup that corresponds to the subgroup as determined by UE in RRC_IDLE state, see TS38.304 [20].

Here, the first ability and/or the third ability may be abilities in the existing 5G communication protocol. For example, the first ability and the third ability may be inactiveStatePO-Determination and ranPagingInIdlePO, respectively. For example, the first ability and the third ability may be abilities newly defined in the above embodiments. The second ability and/or the fourth ability may be newly defined abilities. For example, the second ability and the fourth ability may be inactiveStateSupgroup-Determination and ranPagingInIdleSubgroup, respectively. The specific naming of the first ability, the second ability, the third ability and/or the fourth ability is not limited here.

In this way, in embodiments of the present invention, when the UE and the network device do not support the predetermined ability, the paging subgroup ID of the UE in the inactive state can be determined based on the ability information supported by the network device and the UE respectively. In this way, flexible determination of the paging subgroup ID of the UE in the inactive state can be adapted to various application scenarios.

In some other embodiments, if the UE and the network device do not support the predetermined ability, the UE can determine the paging subgroup ID of the UE in the inactive state according to the formula: SubgroupID = (floor(UE_ID/(N $\times$ Ns)) mod subgroupsNumForUEID) + (subgroupsNumPerPO - subgroupsNumForUEID). In this formula, the paging cycle is the paging cycle of the UE in the inactive state. In this case, miss match problem may occur.

It should be noted that those skilled in the art can understand that the method provided in the embodiments of the present invention can be executed alone or together with some methods in the embodiments of the present invention or some methods in related technologies.

Embodiments of the present invention provide a monitoring method, performed by the UE, including: receiving paging configuration information, where the paging configuration information is used to indicate at least one of: first ability information of the first ability of the UE; second ability information of the second ability of the UE; third ability information of the third ability of the network device; or fourth ability information of the fourth ability of the network device.

In some embodiments, the paging configuration information is used to instruct the UE in the inactive state to determine the paging subgroup ID in the paging subgroup mode, and the paging configuration information includes ability indication information, where the ability indication information is used to indicate at least one of the first ability information of the UE, the second ability information of the UE, the third ability information of the network device, and the fourth ability information of the network device.

In this way, in embodiments of the present invention, the UE can obtain the ability information of the UE and/or the ability information of the network device by receiving the paging configuration information.

In some embodiments, receiving paging configuration information includes: receiving a network signaling carrying the paging configuration information.

Embodiments of the present invention provide a monitoring method, performed by the UE, including: receiving a network signaling carrying the paging configuration information.

Here, the network signaling includes a dedicated signaling or a broadcast signaling.

Here, the network signaling may be, but is not limited to, at least one of: a media access control element (MAC CE), a RRC signaling, and a DCI. Here, the RRC signaling may be, but is not limited to, an RRC release message or an RRC reconfiguration message.

For example, an RRC release message sent by the network device is received. The RRC release message carries the paging configuration information. The paging configuration information is used to indicate at least one of the first ability information of the UE, the second ability information of the UE, and the third ability information of the network device and the fourth ability information of the network device.

In this way, in embodiments of the present invention, the UE can learn the ability information of the network device and/or the ability information of the UE by receiving the network signaling carrying the paging configuration information sent by the network device. If the UE learns the ability information of the network device and/or the ability information of the UE by receiving the RRC release message or the RRC reconfiguration message, the two functions can be implemented through one RRC signaling. For example, when the RRC release message is received, an RRC release message can be used to realize connection release and notification of the ability information of the network device and/or the ability information of the UE. For example, when the RRC reconfiguration message is used, the RRC reconfiguration message can be used to realize UE reconfiguration and notification of the ability information of the network device and/or the ability information of the UE. This can reduce signaling interactions, and reduce the power consumption of the network device and the UE.

It should be noted that those skilled in the art can understand that the method provided in the embodiments of the present invention can be executed alone or together with some methods in the embodiments of the present invention or some methods in related technologies.

A following monitoring method is performed by a network device and is similar to the description of the monitoring method performed by the UE. For technical details not disclosed in the embodiments of the monitoring method performed by the network device, reference can be made to the monitoring method performed by the UE. The description of the executed monitoring method example will not be described in detail here.

As shown in FIG. 7, embodiments of the present invention provide a monitoring method, performed by the network device, including the following step.

In step S71, paging configuration information is sent. The paging configuration information is used to instruct UE in an inactive state to determine a paging subgroup ID in a paging subgrouping mode, and the paging subgroup ID is used for the UE in the inactive state to monitor a wake-up signal and/or a paging message.

In an embodiment, step S71 may be sending the paging configuration information to the UE.

In an embodiment, the paging subgrouping mode includes: a paging subgrouping mode based on UE-ID.

In an embodiment, the paging configuration information includes PEI.

In some embodiments, the paging configuration information is further used to indicate at least one of: first ability information of the UE, where the first ability information is used to indicate an ability of determining an inactive state paging occasion according to an idle state paging occasion; second ability information of the UE, where the second ability information is used to indicate an ability of determining an inactive state paging subgroup according to an idle state subgroup; third ability information of the network device, where the third ability information is used to indicate an ability of determining a paging occasion of RAN paging in the inactive state according to an idle state paging occasion; or fourth ability information of the network device, where the fourth ability information is used to indicate an ability of determining a paging subgroup for sending the wake-up signal under RAN paging in the inactive state according to an idle state paging subgroup.

In some embodiments of the present invention, the paging configuration information is the paging configuration information in the above embodiments. The first ability information, the second ability information, the third ability information, and the fourth ability information may respectively be the first ability information, the second ability information, the third ability information, and the fourth ability information in the above embodiments.

For the above implementation manner, specific reference may be made to the description on the network-side device, which will not be described again here.

It should be noted that those skilled in the art can understand that the method provided in the embodiments of the present invention can be executed alone or together with some methods in the embodiments of the present invention or some methods in related technologies.

In order to further explain the embodiments of the present invention, a specific example is provided below.

The embodiments of the present invention provide a monitoring method, performed by a communication device. The communication device includes a UE and a network device, including the following steps.

In step S81, the paging subgroup ID in the paging subgroup mode of the UE in the inactive state is determined, where the paging subgroup ID is used for the UE in the inactive state to monitor the PEI.

Here, the paging subgrouping mode is the UE-ID based paging subgrouping mode.

Step S81 includes step S81A, step S81B, or step S81C.

In step S81A, in response to the UE being in the inactive state, the paging subgroup ID of the UE in the inactive state is determined according to the paging subgroup ID determination mode of the UE in the idle state.

In an optional embodiment, in response to the UE being in the inactive state, the paging subgroup ID of the UE in the inactive state is determined as the paging subgroup ID used by the UE in the idle state.

In another optional embodiment, in response to the UE being in the inactive state, the paging subgroup ID of the UE in the inactive state is determined according to the paging cycle of the UE in the idle state.

In step S81B, in response to the UE being in the inactive state, the paging subgroup ID of the UE in the inactive state is determined according to the protocol agreement.

In an optional embodiment, in response to the UE being in the inactive state, if the UE supports the ability of monitoring the PEI and supports the ability of the paging subgrouping mode based on the UE-ID, the paging subgroup ID of the UE in the inactive state is determined according to the paging subgroup ID determination mode of the UE in the idle state.

In step S81C, in response to the UE being in the inactive state, and both the UE and the network device supporting the predetermined capability, the paging subgroup ID of the UE in the inactive state is determined according to the paging subgroup ID determination mode of the UE in the idle state.

Here, the predetermined ability of the UE may be the ability to support using the PO in the idle state when the UE is in the inactive state; and/or the predetermined ability of the network device may be the ability to support determining the PO for RAN paging in the inactive state according to the idle state PO.

In step S82C, in response to the UE being in the inactive state, and at least one of the UE and the network device not supporting the predetermined ability, the paging subgroup ID of the UE in the inactive state is determined according to the ability information of the UE and/or the ability information of the network device.

Here, the ability information of the UE may be, but is not limited to, at least one of: first ability information used to indicate an ability of determining an inactive state paging occasion according to an idle state paging occasion, for example, the first ability information may be inactiveStatePO-Determination; or second ability information used to indicate an ability of determining an inactive state paging subgroup according to an idle state subgroup, for example, the second ability information may be inactiveStateSupgroup-Determination.

Here, the ability information of the network device may be, but is not limited to, at least one of: third ability information used to indicate an ability based on an access network of determining a paging occasion of RAN paging in the inactive state according to an idle state paging occasion, for example, the third ability information may be ranPagingInIdlePO; or fourth ability information used to indicate an ability based on an access network of determining a paging subgroup for sending the wake-up signal under RAN paging in the inactive state according to an idle state paging subgroup, for example, the fourth ability information may be ranPagingInIdleSubgroup.

It should be noted that those skilled in the art can understand that the method provided in the embodiments of the present invention can be executed alone or together with some methods in the embodiments of the present invention or some methods in related technologies.

As shown in FIG. 8, embodiments of the present invention provide a monitoring apparatus, including: a processing module 51 configured to determine a paging subgroup ID in a paging subgrouping mode in response to UE being in an inactive state. The paging subgroup ID is used for the UE in the inactive state to monitor a wake-up signal and/or a paging message.

In an embodiment, the paging subgrouping mode includes: a paging subgrouping mode based on UE-ID.

In an embodiment, the wake-up signal is PEI.

Embodiments of the present invention provide a monitoring apparatus, including a processing module 51 configured to determine the paging subgroup ID of the UE in the inactive state according to a paging subgroup ID determination mode of the UE in an idle state in response to the UE being in the inactive state.

Embodiments of the present invention provide a monitoring apparatus, including a processing module 51 configured to determine the paging subgroup ID of the UE in the inactive state as a paging subgroup ID used by the UE in the idle state in response to the UE being in the inactive state.

Embodiments of the present invention provide a monitoring apparatus, including a processing module 51 configured to determine the paging subgroup ID of the UE in the inactive state according to a paging cycle of the UE in the idle state in response to the UE being in the inactive state.

Embodiments of the present invention provide a monitoring apparatus, including a processing module 51 configured to determine the paging subgroup ID of the UE in the inactive state according to the paging subgroup ID determination mode of the UE in the idle state in response to the UE being in the inactive state and the UE supporting an ability of monitoring the wake-up signal.

Embodiments of the present invention provide a monitoring apparatus, including a processing module 51 configured to determine the paging subgroup ID of the UE in the inactive state according to the paging subgroup ID determination mode of the UE in the idle state in response to the UE being in the inactive state and the UE supporting an ability of the paging subgrouping mode based on the UE-ID.

Embodiments of the present invention provide a monitoring apparatus, including a processing module 51 configured to determine the paging subgroup ID of the UE in the inactive state according to the paging subgroup ID determination mode of the UE in the idle state in response to the UE being in the inactive state and the UE supporting an ability of monitoring the wake-up signal and supporting an ability of the paging subgrouping mode based on the UE-ID.

Embodiments of the present invention provide a monitoring apparatus, including a processing module 51 configured to determine the paging subgroup ID of the UE in the inactive state according to the paging subgroup ID determination mode of the UE in the idle state in response to the UE being in the inactive state and both the UE and the network device supporting a predetermined ability.

Embodiments of the present invention provide a monitoring apparatus, including a processing module 51 configured to determine the paging subgroup ID of the UE in the inactive state according to according to one of ability information of the UE or ability information of a network device in response to the UE being in the inactive state and both the UE and the network device supporting a predetermined ability.

Embodiments of the present invention provide a monitoring apparatus, including a processing module 51 configured to determine the paging subgroup ID of the UE in the inactive state according to one of ability information of the UE or ability information of a network device in response to the UE being in the inactive state and the UE and/or the network device supporting a predetermined ability.

Embodiments of the present invention provide a monitoring apparatus, including a processing module 51 configured to determine the paging subgroup ID of the UE in the inactive state according to one of ability information of the UE or ability information of a network device in response to the UE being in the inactive state and at least one of the UE or the network device not supporting a predetermined ability.

In some embodiments, the predetermined ability includes at least one of: a first ability used to indicate an ability of determining an inactive state paging occasion according to an idle state paging occasion; a second ability used to indicate an ability of determining an inactive state paging subgroup according to an idle state subgroup; a third ability used to indicate an ability based on an access network of determining a paging occasion of RAN paging in the inactive state according to an idle state paging occasion; or a fourth ability used to indicate an ability based on an access network of determining a paging subgroup for sending the wake-up signal under RAN paging in the inactive state according to an idle state paging subgroup.

Embodiments of the present invention provide a monitoring apparatus, including a processing module 51 configured to determine the paging subgroup ID of the UE in the inactive state according to the first ability information of the UE in response to the UE being in the inactive state and at least one of the UE or the network device not supporting the predetermined ability. The first ability information is used to indicate an ability of determining an inactive state paging occasion according to an idle state paging occasion.

Embodiments of the present invention provide a monitoring apparatus, including a processing module 51 configured to determine the paging subgroup ID of the UE in the inactive state according to the second ability information of the UE in response to the UE being in the inactive state and at least one of the UE or the network device not supporting the predetermined ability. The second ability is used to indicate an ability of determining an inactive state paging subgroup according to an idle state subgroup.

Embodiments of the present invention provide a monitoring apparatus, including a processing module 51 configured to determine the paging subgroup ID of the UE in the inactive state according to the third ability information of the network device in response to the UE being in the inactive state and at least one of the UE or the network device not supporting the predetermined ability. The third ability is used to indicate an ability based on an access network of determining a paging occasion of RAN paging in the inactive state according to an idle state paging occasion.

Embodiments of the present invention provide a monitoring apparatus, including a processing module 51 configured to determine the paging subgroup ID of the UE in the inactive state according to the fourth ability information of the network device in response to the UE being in the inactive state and at least one of the UE or the network device not supporting the predetermined ability. The fourth ability is used to indicate an ability based on an access network of determining a paging subgroup for sending the wake-up signal under RAN paging in the inactive state according to an idle state paging subgroup.

Embodiments of the present invention provide a monitoring apparatus, including a receiving module configured to receive paging configuration information, where the paging configuration information is used to instruct the UE in the inactive state to determine the paging subgroup ID in the paging subgrouping mode.

Embodiments of the present invention provide a monitoring apparatus, including a receiving module configured to receive paging configuration information, where the paging configuration information is used to indicate at least one of: first ability information of the first ability of the UE; second ability information of the second ability of the UE; third ability information of the third ability of the network device; or fourth ability information of the fourth ability of the network device.

As shown in FIG. 9, embodiments of the present invention provide a monitoring apparatus, including: a sending module 61 configured to send paging configuration information, where the paging configuration information is used to instruct a UE in an inactive state to determine a paging subgroup ID in a paging subgrouping mode, and the paging subgroup ID is used for the UE in the inactive state to monitor a wake-up signal and/or a paging message.

In an embodiment, the paging subgrouping mode includes: a paging subgrouping mode based on UE-ID.

In an embodiment, the paging configuration information is further used to indicate at least one of: first ability information of the UE, where the first ability information is used to indicate an ability of determining an inactive state paging occasion according to an idle state paging occasion; second ability information of the UE, where the second ability information is used to indicate an ability of determining an inactive state paging subgroup according to an idle state subgroup; third ability information of the network device, where the third ability information is used to indicate an ability of determining a paging occasion of RAN paging in the inactive state according to an idle state paging occasion; or fourth ability information of the network device, where the fourth ability information is used to indicate an ability of determining a paging subgroup for sending the wake-up signal under RAN paging in the inactive state according to an idle state paging subgroup.

It should be noted that those skilled in the art can understand that the apparatus provided in the embodiments of the present invention may be performed alone or together with some apparatuses in the embodiments of the present invention or some apparatuses in the related technologies.

Regarding the apparatus in the above embodiments, specific modes in which each module performs operation(s) has been described in detail in the embodiments related to the method, and will not be described in detail here.

Embodiments of the present invention provide a communication device, including: a processor; and a memory for storing processor-executable instructions. The processor is configured to run the executable instructions to perform the monitoring method according to any embodiment of the present invention.

In an embodiment, the communication device may include, but not limited to, at least one of a network device or a UE.

The processor may include various types of storage media, which are non-transitory computer storage media, and can continue to memorize and store information thereon after the communication device is powered off.

The processor may be connected to the memory through a bus for reading the executable program stored on the memory, and to perform, for example, at least one of the methods shown in FIG. 2 to FIG. 7.

Embodiments of the present invention further provide a computer storage medium. The computer storage medium stores a computer executable program. When the executable program is executed by a processor, the monitoring method of any embodiment of the present invention (e.g., at least one of the methods shown in FIGS. 2 to 7) is implemented.

Regarding the apparatus or the storage medium in the above embodiments, the specific modes in which each module performs operation(s) has been described in detail in the embodiments related to the method, and will not be described in detail here.

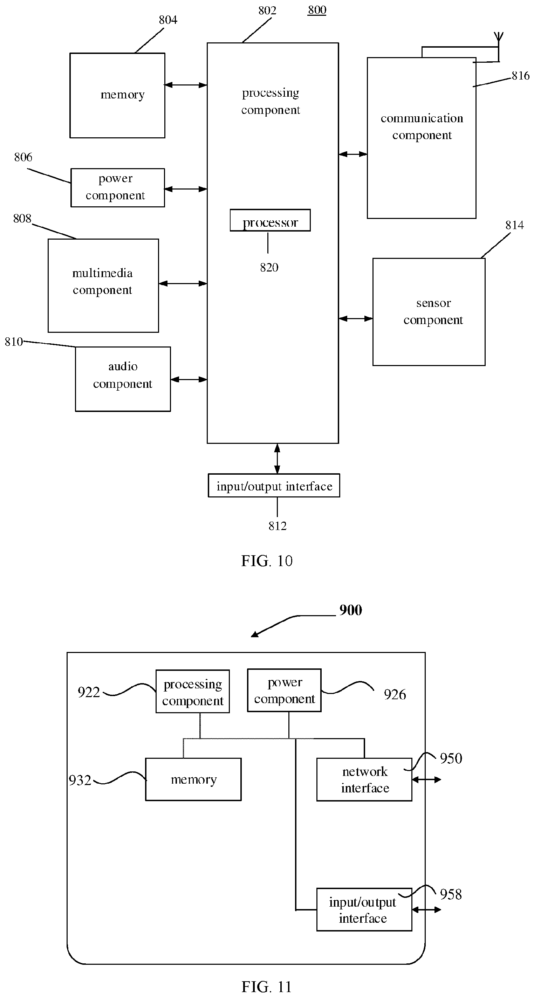

FIG. 10 is a block diagram showing a UE 800 according to an illustrative embodiment. For example, the UE 800 may be a mobile phone, a computer, a digital broadcast terminal, a messaging device, a game console, a tablet device, a medical device, a fitness device, a personal digital assistant, or the like.

Referring to FIG. 10, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to perform all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 4G, or 5G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identifier (RFID) technology, an infrared data association (IrDA) technology, an ultra-wideband (UWB) technology, a Bluetooth (BT) technology, and other technologies.

In an illustrative embodiment, the UE 800 may be implemented with one or more of an application specific integrated circuits (ASIC), a digital signal processor (DSP), a digital signal processing device (DSPD), a programmable logic device (PLD), a field programmable gate array (FPGA), a controller, a micro-controller, a microprocessor, or other electronic elements, for performing the above-mentioned method.

In an illustrative embodiment, there is also provided a non-transitory computer readable storage medium including instructions, such as included in the memory 804, executable by the processor 820 in the UE 800, for completing the above-mentioned method. For example, the non-transitory computer-readable storage medium may be a ROM, a random access memory (RAM), a CD-ROM, a magnetic tape, a floppy disc, an optical data storage device, and the like.

As shown in FIG. 11, embodiments of the present invention provide a structure of a base station. For example, the base station 900 may be provided as a network device. Referring to FIG. 11, the base station 900 includes a processing component 922, which further includes one or more processors, and memory resources represented by a memory 932 for storing instructions executable by the processing component 922, such as an application program. The application program stored in the memory 932 may include one or more modules each corresponding to a set of instructions. In addition, the processing component 922 is configured to execute instructions to perform any method applied to the base station as described above.

The base station 900 may further include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server TM, Mac OS XTM, UnixTM, LinuxTM, FreeBSDTM, or the like.

Other embodiments of the present invention will be apparent to those skilled in the art from consideration of the specification and practice of the present invention disclosed here. The present invention is intended to cover any variations, uses, or adaptations of the present invention following the general principles thereof and including such departures from the present invention as come within known or customary practice in the art. It is intended that the specification and examples be considered as illustrative only, with a true scope and spirit of the present invention being indicated by the scope of the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the scope of the appended claims.

**Claims**

1. A monitoring method, performed by a user equipment (UE), comprising:
   determining a paging subgroup identifier (ID) in a paging subgrouping mode in response to the UE being in an inactive state, wherein the paging subgroup ID is used for the UE in the inactive state to monitor a wake-up signal and/or a paging message.

2. The method according to claim 1, wherein the paging subgrouping mode comprises:
   a paging subgrouping mode based on an ID of the UE (UE-ID).

3. The method according to claim 1 or 2, wherein determining the paging subgroup ID in the paging subgrouping mode in response to the UE being in the inactive state comprises:
   determining the paging subgroup ID of the UE in the inactive state according to a paging subgroup ID determination mode of the UE in an idle state in response to the UE being in the inactive state.

4. The method according to claim 3, wherein determining the paging subgroup ID of the UE in the inactive state according to the paging subgroup ID determination mode of the UE in the idle state comprises one of:

determining the paging subgroup ID of the UE in the inactive state as a paging subgroup ID used by the UE in the idle state; or
determining the paging subgroup ID of the UE in the inactive state according to a paging cycle of the UE in the idle state.

5. The method according to claim 3, wherein determining the paging subgroup ID of the UE in the inactive state according to the paging subgroup ID determination mode of the UE in the idle state comprises at least one of:

determining the paging subgroup ID of the UE in the inactive state according to the paging subgroup ID determination mode of the UE in the idle state in response to the UE supporting an ability of monitoring the wake-up signal;
determining the paging subgroup ID of the UE in the inactive state according to the paging subgroup ID determination mode of the UE in the idle state in response to the UE supporting an ability of the paging subgrouping mode based on the UE-ID; or
determining the paging subgroup ID of the UE in the inactive state according to the paging subgroup ID determination mode of the UE in the idle state in response to the UE supporting an ability of monitoring the wake-up signal and supporting an ability of the paging subgrouping mode based on the UE-ID.

6. The method according to claim 3, wherein determining the paging subgroup ID of the UE in the inactive state according to the paging subgroup ID determination mode of the UE in the idle state comprises:

determining the paging subgroup ID of the UE in the inactive state according to the paging subgroup ID determination mode of the UE in the idle state in response to both the UE and a network device supporting a predetermined ability; or
determining the paging subgroup ID of the UE in the inactive state according to the paging subgroup ID determination mode of the UE in the idle state in response to the UE and/or a network device supporting a predetermined ability.

7. The method according to claim 3, wherein the method comprises:
determining the paging subgroup ID of the UE in the inactive state according to one of ability information of the UE or ability information of a network device in response to at least one of the UE or the network device not supporting a predetermined ability.

8. The method according to claim 6 or 7, wherein the predetermined ability comprises at least one of:

a first ability used to indicate an ability of determining an inactive state paging occasion according to an idle state paging occasion;
a second ability used to indicate an ability of determining an inactive state paging subgroup according to an idle state subgroup;
a third ability used to indicate an ability based on an access network of determining a paging occasion of radio access network (RAN) paging in the inactive state according to an idle state paging occasion; or
a fourth ability used to indicate an ability based on an access network of determining a paging subgroup for sending the wake-up signal under RAN paging in the inactive state according to an idle state paging subgroup.

9. The method according to claim 8, wherein the method comprises:
receiving paging configuration information, wherein the paging configuration information is used to indicate at least one of:

first ability information of the first ability of the UE;
second ability information of the second ability of the UE;
third ability information of the third ability of the network device; or
fourth ability information of the fourth ability of the network device.

10. A monitoring method, performed by a network device, comprising:
sending paging configuration information, wherein the paging configuration information is used to instruct a user equipment (UE) in an inactive state to determine a paging subgroup identifier (ID) in a paging subgrouping mode, and the paging subgroup ID is used for the UE in the inactive state to monitor a wake-up signal and/or a paging message.

11. The method according to claim 10, wherein the paging subgrouping mode comprises:
a paging subgrouping mode based on an ID of the UE (UE-ID).

12. The method according to claim 10, wherein the paging configuration information is further used to indicate at least one of:

first ability information of the UE, wherein the first ability information is used to indicate an ability of determining an inactive state paging occasion according to an idle state paging occasion;
second ability information of the UE, wherein the second ability information is used to indicate an ability of determining an inactive state paging subgroup according to an idle state subgroup;
third ability information of the network device, wherein the third ability information is used to indicate an ability of determining a paging occasion of radio access network (RAN) paging in the inactive state according to an idle state paging occasion; or
fourth ability information of the network device, wherein the fourth ability information is used to indicate an ability of determining a paging subgroup for sending the wake-up signal under RAN paging in the inactive state according to an idle state paging subgroup.

13. A monitoring apparatus, comprising:
a processing module configured to determine a paging subgroup identifier (ID) in a paging subgrouping mode in response to a user equipment (UE) being in an inactive state, wherein the paging subgroup ID is used for the UE in the inactive state to monitor a wake-up signal and/or a paging message.

14. A monitoring apparatus, comprising:
a sending module configured to send paging configuration information, wherein the paging configuration information is used to instruct a user equipment (UE) in an inactive state to determine a paging subgroup identifier (ID) in a paging subgrouping mode, and the paging subgroup **ID** is used for the UE in the inactive state to monitor a wake-up signal and/or a paging message.

15. A communication device, comprising:

a processor; and
a memory for storing instructions executable by the processor;
wherein the processor is configured to execute the instructions to cause the monitoring method according to any one of claims 1 to 9 or any one of claims 10 to 12 to be implemented.

16. A computer storage medium having stored therein a computer-executable program that, when executed by a processor, causes the monitoring method according to any one of claims 1 to 9 or any one of claims 10 to 12 to be implemented.

FIG. 1

| UE | | network device |
|---|---|---|

radio communication

S21: determining a paging subgroup ID in a paging subgrouping mode in response to the UE being in an inactive state, where the paging subgroup ID is used for the UE in the inactive state to monitor a wake-up signal and/or a paging message

FIG. 2

| UE | | network device |
|---|---|---|

radio communication

S31: determining the paging subgroup ID of the UE in the inactive state according to a paging subgroup ID determination mode of the UE in an idle state in response to the UE being in the inactive state

FIG. 3

| UE | | network device |

radio communication

S41: determining the paging subgroup ID of the UE in the inactive state according to the paging subgroup ID determination mode of the UE in the idle state in response to the UE supporting an ability of monitoring the wake-up signal; and/or determining the paging subgroup ID of the UE in the inactive state according to the paging subgroup ID determination mode of the UE in the idle state in response to the UE supporting an ability of the paging subgrouping mode based on the UE-ID; and/or determining the paging subgroup ID of the UE in the inactive state according to the paging subgroup ID determination mode of the UE in the idle state in response to the UE supporting an ability of monitoring the wake-up signal and supporting an ability of the paging subgrouping mode based on the UE-ID

FIG. 4

| UE | | network device |

radio communication

S51: determining the paging subgroup ID of the UE in the inactive state according to the paging subgroup ID determination mode of the UE in the idle state in response to both the UE and a network device supporting a predetermined ability; or determining the paging subgroup ID of the UE in the inactive state according to the paging subgroup ID determination mode of the UE in the idle state in response to the UE and/or a network device supporting a predetermined ability

FIG. 5

| UE | | network device |
|---|---|---|

radio communication

S61: determining the paging subgroup ID of the UE in the inactive state according to one of ability information of the UE or ability information of a network device in response to at least one of the UE or the network device not supporting a predetermined ability

FIG. 6

| UE | | network device |
|---|---|---|

S71: sending paging configuration information, where the paging configuration information is used to instruct a UE in an inactive state to determine a paging subgroup ID in a paging subgrouping mode, and the paging subgroup ID is used for the UE in the inactive state to monitor a wake-up signal and/or a paging message

FIG. 7

processing module 51

monitoring apparatus

FIG. 8

sending module 61

monitoring apparatus

FIG. 9

804    802    800

memory    processing component    communication component

816

806

power component

processor

814

808

820

multimedia component

sensor component

810

audio component

input/output interface

812

FIG. 10

900

922    processing component    power component    926

950

932    memory    network interface

958

input/output interface

FIG. 11

| | INTERNATIONAL SEARCH REPORT | International application No.<br><br>**PCT/CN2022/097224** |
|---|---|---|

**A. CLASSIFICATION OF SUBJECT MATTER**

H04W 68/00(2009.01)i

According to International Patent Classification (IPC) or to both national classification and IPC

**B. FIELDS SEARCHED**

Minimum documentation searched (classification system followed by classification symbols)

H04W 68/-

Documentation searched other than minimum documentation to the extent that such documents are included in the fields searched

Electronic data base consulted during the international search (name of data base and, where practicable, search terms used)

CNABS; CNTXT; CNKI: PO, 寻呼分组, 标识, ID, 非激活态, 空闲态, PEI, RRC; VEN; WOTXT; EPTXT; USTXT; 3GPP: PO, RRC, inactive, idle, subgroup+, ID, PEI, DCI

**C. DOCUMENTS CONSIDERED TO BE RELEVANT**

| Category* | Citation of document, with indication, where appropriate, of the relevant passages | Relevant to claim No. |
|---|---|---|
| A | CN 113906796 A (BEIJING XIAOMI MOBILE SOFTWARE CO., LTD.) 07 January 2022 (2022-01-07)<br>    entire document | 1-16 |
| A | CN 108924913 A (CHINA ACADEMY OF TELECOMMUNICATIONS TECHNOLOGY) 30 November 2018 (2018-11-30)<br>    entire document | 1-16 |
| A | CN 113873641 A (SPREADTRUM COMMUNICATIONS (SHANGHAI) CO., LTD.) 31 December 2021 (2021-12-31)<br>    entire document | 1-16 |
| A | CN 108966322 A (VIVO COMMUNICATION TECHNOLOGY CO., LTD.) 07 December 2018 (2018-12-07)<br>    entire document | 1-16 |
| A | US 2022046582 A1 (SAMSUNG ELECTRONICS CO., LTD.) 10 February 2022 (2022-02-10)<br>    entire document | 1-16 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2023** | **02 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/097224** |

**C.    DOCUMENTS CONSIDERED TO BE RELEVANT**

| Category* | Citation of document, with indication, where appropriate, of the relevant passages | Relevant to claim No. |
| --- | --- | --- |
| X | HUAWEI et al. "Further discussion on paging subgrouping"<br>*3GPP TSG-RAN WG2 Meeting #115 electronic, R2-2108027,* 06 August 2021 (2021-08-06), sections 1-2 | 1-16 |

Form PCT/ISA/210 (second sheet) (July 2022)

## INTERNATIONAL SEARCH REPORT
### Information on patent family members

International application No.

**PCT/CN2022/097224**

| Patent document cited in search report | | | Publication date (day/month/year) | Patent family member(s) | | | Publication date (day/month/year) |
|---|---|---|---|---|---|---|---|
| CN | 113906796 | A | 07 January 2022 | None | | | |
| CN | 108924913 | A | 30 November 2018 | JP | 2020512787 | A | 23 April 2020 |
| | | | | JP | 6832449 | B2 | 24 February 2021 |
| | | | | EP | 3606184 | A1 | 05 February 2020 |
| | | | | US | 2021112495 | A1 | 15 April 2021 |
| | | | | US | 11172447 | B2 | 09 November 2021 |
| | | | | WO | 2018177052 | A1 | 04 October 2018 |
| | | | | KR | 20190133755 | A | 03 December 2019 |
| | | | | KR | 102235394 | B1 | 01 April 2021 |
| | | | | TW | 201838364 | A | 16 October 2018 |
| | | | | TW | 676368 | B1 | 01 November 2019 |
| CN | 113873641 | A | 31 December 2021 | None | | | |
| CN | 108966322 | A | 07 December 2018 | WO | 2018210135 | A1 | 22 November 2018 |
| | | | | US | 2020205076 | A1 | 25 June 2020 |
| | | | | US | 11252665 | B2 | 15 February 2022 |
| | | | | EP | 3627906 | A1 | 25 March 2020 |
| | | | | CN | 108966322 | B | 07 September 2021 |
| US | 2022046582 | A1 | 10 February 2022 | IN | 202041033947 | A | 11 February 2022 |

Form PCT/ISA/210 (patent family annex) (July 2022)